# EUROPÄISCHE PATENTSCHRIFT

(11) **EP 2 199 144 B1**
(45) Veröffentlichungstag und Bekanntmachung des Hinweises auf die Patenterteilung: **27.06.2012**
(21) Anmeldenummer: 08022168.2
(22) Anmeldetag: 19.12.2008
(51) Int. Cl.: B60N 2/00, B60R 21/015

(54) **Kapazitäsbasiertes System zur Erfassung des Belegungszustandes eines Fahrzeugsitzes**
Capacity based system for determining the occupancy status of a vehicle seat
Système à base capacitive destiné à la détermination de l'état d'occupation d'un siège de véhicule

(43) Veröffentlichungstag der Anmeldung: 23.06.2010
(73) Patentinhaber: Delphi Technologies, Inc., Troy MI 48007 (US)
(72) Erfinder: Fischer, Thomas, 57482 Wenden (DE)
(74) Vertreter: Denton, Michael John

(56) Entgegenhaltungen:
- EP-A- 1 002 690
- DE-A1- 4 417 827
- US-A- 6 066 954
- US-A1- 2005 128 082

## Beschreibung

Die Erfindung betrifft ein kapazitätsbasiertes System zur Erfassung eines Belegungszustandes eines Fahrzeugsitzes.

Kapazitätsbasierte Systeme zur Sitzbelegungserfassung sind bekannt und dienen insbesondere der Unterscheidung zwischen einem auf einem Fahrzeugsitz befindlichem Kindersitz und einem auf dem Fahrzeugsitz sitzenden Erwachsenen. Insbesondere für einen Einsatz in den USA müssen solche Insassenerfassungssysteme besondere Vorschriften erfüllen. Dabei soll insbesondere sichergestellt sein, dass bei Kleinkindern in einem Alter von bis zu einem Jahr der oder die dem Beifahrersitz zugeordneten Airbags nicht ausgelöst werden.

Bei den bisher üblichen kapazitätsbasierten Erfassungssystemen ist der betreffende Sensor unterhalb des Sitzbezuges und oberhalb des Sitzschaumes angeordnet, was eine Reihe von Nachteilen mit sich bringt. So hat der Sensor Einfluss auf den Sitzkomfort. Die Ausführung des Sitzbezugs kann sich auf die Leistungsfähigkeit des Sensors auswirken und unterliegt daher entsprechenden Einschränkungen. Zudem unterliegt auch die Gestaltung der Sitzschaumoberfläche gewissen Einschränkungen. Schließlich ergeben sich auch hinsichtlich der Lebensdauer eines solchen Sensors Probleme.

Aus der DE 44 17 827 A1, welche als nächstliegender, bekannter, Stand der Technik betrachtet wird, ist ein kapazitätsbasiertes System zur Erfassung des Belegungszustandes eines Fahrzeugsitzes bekannt, bei dem unter dem Bezug des Sitzes im Sitzpolster sowohl Messelektroden als auch Referenzelektroden integriert sind. Die Referenzelektroden sind außerhalb des Bereichs zur Erfassung einer eventuellen Belegung angeordnet. Um eine Beeinflussung des Messergebnisses durch sich ändernde Umweltbedingungen wie Feuchtigkeits- und Temperaturschwankungen zu vermeiden, wird eine jeweilige Belegung des Sitzes in Abhängigkeit von Änderungen der Kapazität der Messelektroden relativ zu der der Referenzelektroden erfasst.

Aus der US-A-6 066 954 ist bereits ein kapazitätsbasiertes System zur Erfassung des Belegungszustandes eines Fahrzeugsitzes mit auf der Unterseite des Sitzschaumes angeordneten Elektroden bekannt.

Der Erfindung liegt die Aufgabe zugrunde, ein verbessertes kapazitätsbasiertes System zur Erfassung des Belegungszustandes eines Fahrzeugsitzes zu schaffen, bei dem die zuvor genannten Probleme auf möglichst einfache und zuverlässige Art und Weise beseitigt sind.

Erfindungsgemäß wird diese Aufgabe gelöst durch ein kapazitätsbasiertes System mit den Merkmalen des Anspruchs 1. Das kapazitätsbasierte System zur Erfassung des Belegungszustandes eines Fahrzeugsitzes umfasst somit eine Sendeelektrodenanordnung und eine Empfangselektrodenanordnung, die auf der Unterseite des Sitzschaums angeordnet sind. Dabei ist die Sendeelektrodenanordnung so beaufschlagt und die Struktur oder Geometrie der Sendeelektrodenanordnung und/oder der Empfangselektrodenanordnung so gewählt, dass sich zwischen der Sendeelektrodenanordnung und der Empfangselektrodenanordnung wenigstens ein im Wesentlichen nur bis in den Bereich der Sitzschaumoberfläche reichendes elektrisches Nahfeld und wenigstens ein insbesondere deutlich über den Bereich der Sitzschaumoberfläche hinausreichendes elektrisches Fernfeld einstellt. Zudem umfasst das kapazitätsbasierte System eine Steuer- und/oder Auswerteeinrichtung, die einen jeweiligen Belegungszustand in Abhängigkeit von sowohl der jeweiligen Feldstärke des wenigstens einen Nahfeldes als auch der jeweiligen Feldstärke des wenigstens einen Fernfeldes erfasst und bei belegtem Fahrzeugsitz in Abhängigkeit von einer gegebenenfalls relativ zueinander unterschiedlichen Beeinflussung des Nahfeldes und des Fernfeldes zwischen unterschiedlichen Belegungszuständen unterscheidet.

Aufgrund dieser Ausbildung ist eine zuverlässigere Unterscheidung zwischen unterschiedlichen Belegungszuständen möglich, nachdem je nach Belegungszustand das wenigstens eine elektrische Nahfeld und das wenigstens eine elektrische Fernfeld unterschiedlich beeinflusst werden. So wirken sich beispielsweise Änderungen der kapazitiven Kopplung im Bereich des Sitzschaumes, beispielsweise bedingt durch eindringende Feuchtigkeit oder auf dem Sitz befindliches Wasser usw., zwar auf ein jeweiliges Nahfeld, nicht jedoch auf ein jeweiliges Fernfeld aus. Dagegen bringt eine Belegung des Sitzes durch eine Person eine deutliche Ände- rung sowohl eines jeweiligen Nah- als auch eines jeweiligen Fernfeldes mit sich. Eine Belegung des Fahrzeugsitzes mit Kindersitzen oder anderen Gegenständen führt zu keiner signifikanten Änderung eines jeweiligen Fernfeldes, während sich ein jeweiliges Nahfeld merklich ändert. Es kann somit insbesondere über das sich je nach Belegungszustand ändernde Verhältnis der Kapazitäten auch auf die Art des jeweiligen Belegungszustandes geschlossen werden.

Die Sendeelektrodenanordnung kann eine oder auch mehrere Sendeelektroden, und die Empfangselektrodenanordnung kann eine oder mehrere Empfangselektroden umfassen. Dabei kann beispielsweise mehreren Sendeelektroden eine gemeinsame Empfangselektrode zugeordnet sein. Denkbar sind beispielsweise auch solche Ausführungen, bei denen jeder Sendeelektrode jeweils eine Empfangsdiode zugeordnet ist. Grundsätzlich ist es auch möglich, mehreren Empfangselektroden eine gemeinsame Sendediode zuzuordnen.

Bevorzugt ist die Anzahl der Sendeelektroden größer als die Anzahl der Empfangselektroden, da die Sendeelektroden hinsichtlich der Hardware weit weniger komplex sind. Grundsätzlich kann jedoch die Anzahl der Sendeelektroden auch gleich oder kleiner als die Anzahl der Empfangselektroden sein.

Insbesondere zur Common-Mode-Unterdrückung können die Sendeelektrodenanordnung, die Empfangselektrodenanordnung und/oder die Steuer- und/oder Auswerteeinrichtung beispielsweise auch differentiell ausgeführt sein. Vorteilhafterweise ist also auch eine differentielle Ausführungsform des erfindungsgemäßen Systems denkbar.

Die Elektroden können beispielsweise zumindest teilweise insbesondere linear hintereinander oder nebeneinander angeordnet sein. Vorteilhafterweise sind jedoch auch solche Ausführungen denkbar, bei denen die Sende- und/oder Empfangselektroden zumindest teilweise entsprechend einer zweidimensionalen Anordnung verteilt sind.

Bevorzugt sind wenigstens eine Sendeelektrode und/oder wenigstens eine Empfangselektrode jeweils streifenartig ausgeführt. Dabei können beispielsweise zumindest zwei streifenartige Elektroden vorgesehen sein, die parallel zueinander angeordnet sind.

Gemäß einer zweckmäßigen praktischen Ausführungsform kann beispielsweise eine Sendeelektrode zwischen einer ersten und einer zweiten Empfangselektrode angeordnet sein, wobei deren Abstand zur ersten Empfangselektrode beispielsweise größer als deren Abstand zur zweiten Empfangselektrode sein kann. Wie bereits erwähnt, sind vorteilhafterweise jedoch auch solche Ausführungen denkbar, bei denen die Sende- und/oder Empfangselektroden zumindest teilweise entsprechend einer zweidimensionalen Anordnung verteilt sind.

Von Vorteil ist insbesondere auch, wenn wenigstens eine Sendeelektrode und/oder wenigstens eine Empfangselektrode in Form einer flexiblen gedruckten Schaltung ausgeführt sind, wobei bevorzugt alle Elektroden in Form einer solchen flexiblen gedruckten Schaltung ausgeführt sind.

Zweckmäßigerweise ist wenigstens eine Sendeelektrode und/oder wenigstens eine Empfangselektrode im Bereich des Bodens einer dem Fahrzeugsitz zugeordneten Sitzwanne angeordnet. Dabei ist vorzugsweise wenigstens eine Sendeelektrode und/oder wenigstens eine Empfangselektrode bevorzugt in einem definierten Abstand vom Sitzwannenboden vorgesehen. Der Abstand zwischen dem Sitzwannenboden und wenigstens einer Sendeelektrode und/oder wenigstens einer Empfangselektrode kann beispielsweise im Bereich von etwa 3 mm liegen.

Gemäß einer zweckmäßigen praktischen Ausführungsform ist wenigstens eine Sendeelektrode und/oder wenigstens eine Empfangselektrode jeweils über einen zugeordneten Abstandshalter am Sitzwannenboden angeordnet. Der jeweilige Abstandshalter kann insbesondere flexibel ausgeführt sein. Bevorzugt ist als Abstandshalter jeweils ein gewebebasierter Abstandshalter vorgesehen. So können diese Abstandshalter beispielsweise aus Filz oder dergleichen bestehen.

Gemäß einer bevorzugten Ausführungsform können ein oder mehrere Abstandshalter jeweils streifenartig ausgeführt sein. Dies ist insbesondere dann zweckmäßig, wenn auch die jeweiligen Elektroden streifenartig ausgeführt sind.

Von Vorteil ist insbesondere auch, wenn zur Erfassung von auf dem Fahrzeugsitz positionierten geerdeten Metallflächen zudem Mittel zur Wirbelstrommessung vorgesehen sind. Über die Steuer- und/oder Auswerteeinheit kann dann beispielsweise auch ein über einen Ladestecker angeschlossenes Notebook auf dem Fahrzeugsitz erfasst werden.

Die Steuer- und/oder Auswerteeinrichtung ist bevorzugt so ausgeführt, dass in Abhängigkeit von der jeweiligen Feldstärke wenigstens eines Nahfeldes und der jeweiligen Feldstärke wenigstens eines Fernfeldes bzw. deren Verhältnis und/oder in Abhängigkeit von der Wirbelstrommessung unterschiedliche Belegungszustände erfassbar sind. Dabei kann die Steuer- und/oder Auswerteeinrichtung insbesondere so ausgeführt sein, dass sie in Abhängigkeit von der jeweiligen Feldstärke wenigstens eines Nahfeldes und der jeweiligen Feldstärke wenigstens eines Fernfeldes bzw. deren Verhältnis und/oder in Abhängigkeit von der Wirbelstrommessung zwischen unterschiedlichen Belegungszuständen unterscheidet.

Die Steuer- und/oder Auswerteeinrichtung kann beispielsweise durch eine integrierte Schaltung verwirklicht sein.

Mit dem erfindungsgemäßen kapazitätsbasierten System können Umwelteinflüsse wie insbesondere Feuchtigkeit kompensiert werden. Da die Elektroden auf der Unterseite bzw. unterhalb des Sitzschaums angeordnet sind, wird der Sitzkomfort nicht beeinträchtigt. Die Sitzschaumoberfläche kann ohne Beeinträchtigung der Funktion des kapazitätsbasierten Erfassungssystems beliebig gestaltet sein. Zudem ist eine gute Umweltstabilität gewährleistet. Nicht zuletzt aufgrund der einfacheren Integrationsmöglichkeiten ergeben sich geringere Kosten.

Die Erfindung wird im Folgenden anhand von Ausführungsbeispielen unter Bezugnahme auf die Zeichnung näher erläutert; in dieser zeigen:
- Fig. 1: eine schematische Seitenansicht einer Sitzwanne mit im Bereich des Wannenbodens angeordneten Elektro- den einer beispielhaften Ausführungsform des erfin- dungsgemäßen Belegungserfassungssystems,
- Fig. 2: eine schematische Draufsicht der in Fig. 1 gezeigten Sitzwanne,
- Fig. 3: eine rein schematische Darstellung einer Elektroden- anordnung für eine differentielle Ausführungsform des kapazitätsbasierten Systems und
- Fig. 4: eine rein schematische Darstellung mehrerer Sende- und Empfangselektroden, die entsprechend einer zwei- dimensionalen Anordnung verteilt sind.

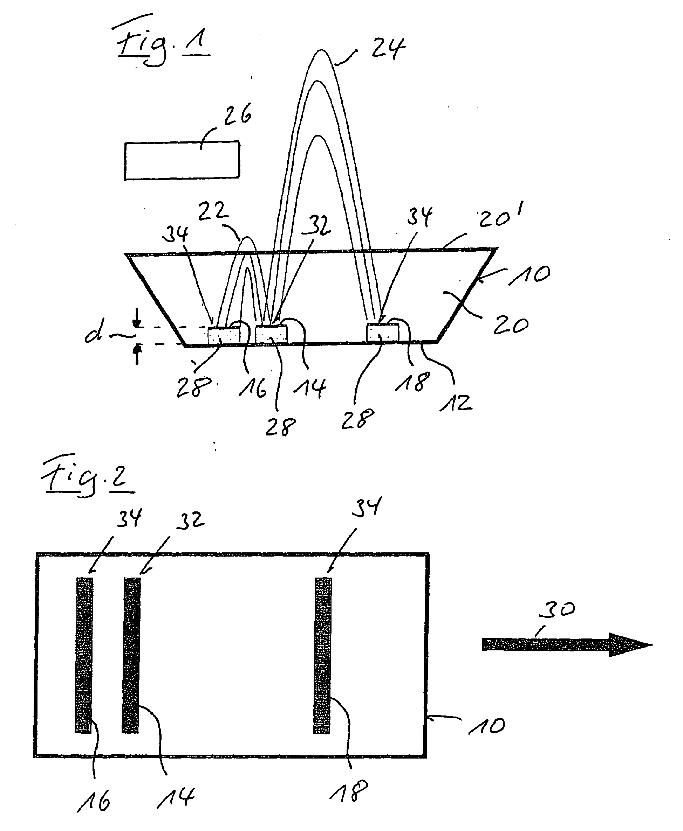

Fig. 1 zeigt in schematischer Seitenansicht eine einem Fahrzeugsitz zugeordnete Sitzwanne 10 mit im Bereich des Wannenbodens 12 angeordneten Elektroden 14 - 18 einer beispielhaften Ausführungsform des erfindungsgemäßen kapazitätsbasierten Systems zur Erfassung des Belegungszustandes eines Fahrzeugsitzes. Dabei ist beispielsweise eine Elektrode 14 einer Sendeelektrodenanordnung 32 zugeordnet, während beispielsweise zwei Elektroden 14, 16 einer Empfangselektrodenanordnung 34 zugeordnet sind. Es können jedoch beispielsweise auch mehr Sendeelektroden als Empfangselektroden oder eine gleiche Anzahl von Sende- und Empfangselektroden vorgesehen sein.

Im vorliegenden Fall umfasst das kapazitätsbasierte Erfassungssystem beispielsweise wenigstens eine Sendeelektrode 14 und wenigstens zwei Empfangselektroden 16, 18, die auf der Unterseite der unterhalb des dem Fahrzeugsitz zugeordneten Sitzschaums angeordnet sind.

Die Sendeelektrode 14 ist so beaufschlagt und die Struktur oder Geometrie der Sendeelektrode 14 und/oder der Empfangselektroden 14, 18 ist so gewählt, dass sich zwischen der Sendeelektrode 14 und einer ersten Empfangselektrode 16 ein im Wesentlichen nur bis in den Bereich der Oberfläche 20' des vorzugsweise in die Sitzwanne 10 eingesetzten Sitzschaums 20 reichendes elektrisches Nahfeld 22 und zwischen der Sendeelektrode 14 und einer zweiten Empfangselektrode 18 ein insbesondere deutlich über den Bereich der Sitzschaumoberfläche 20' hinausreichendes elektrisches Fernfeld 24 einstellt. Die Sitzschaumoberfläche 20' kann, wie beim vorliegenden Ausführungsbeispiel, beispielsweise zumindest im Wesentlichen in der Ebene des oberen Randes der Sitzwanne 10 liegen.

Das kapazitätsbasierte System umfasst überdies eine Steuer- und/oder Auswerteeinrichtung 26, die einen jeweiligen Belegungszustand in Abhängigkeit von sowohl der jeweiligen Feldstärke des Nahfeldes 22 als auch der jeweiligen Feldstärke des Fernfeldes 24 erfasst.

Wie in der in Fig. 2 gezeigten schematischen Draufsicht der Sitzwanne 10 zu erkennen ist, können die Sendeelektrode 14 und/oder die Empfangselektroden 16, 18 jeweils streifenartig ausgeführt sein, wobei im vorliegenden Fall sämtliche Elektroden 14 - 18 streifenartig ausgeführt sind. Dabei können die streifenärtigen Elektroden 14 - 18 insbesondere parallel zueinander angeordnet sein, wie dies ebenfalls in der Fig. 2 gezeigt ist. Im vorliegenden Fall sind diese Elektroden 14 - 18 nebeneinander angeordnet und relativ zueinander ausgerichtet. Dabei ist zweckmäßigerweise die Sendeelektrode 14 zwischen der ersten Empfangselektrode 16 und der zweiten Empfangselektrode 18 angeordnet. Bevorzugt ist der Abstand der Sendeelektrode 14 zur ersten Empfangselektrode 16 kleiner als deren Abstand zur zweiten Empfangselektrode 18.

Wie anhand der Fig. 1 zu erkennen ist, reicht das Nahfeld 22 beim vorliegenden Ausführungsbeispiel lediglich geringfügig über die Sitzschaumoberfläche 20' nach oben hinaus. Dagegen reicht das elektrische Fernfeld 24 deutlich über diese Sitzschaumoberfläche 20' nach oben hinaus. Im vorliegenden Fall ist der nach oben über die Sitzschaumoberfläche 20' hinausreichende Bereich des Fernfeldes 24 in einer Richtung senkrecht zur Sitzschaumoberfläche 20' gemessen mehr als doppelt so groß als dessen innerhalb des Sitzschaums 20 oder der Sitzwanne 10 liegender Feldbereich. Demgegenüber macht der in einer Richtung senkrecht zur Sitzschaumoberfläche 20' über die Sitzwanne 20 nach oben hinausragende Abschnitt des Nahfeldes 22 lediglich einen Bruchteil des innerhalb des Sitzschaums 20 bzw. der Sitzwanne 10 liegenden Feldbereiches dieses Nahfeldes aus. Grundsätzlich können das elektrische Nahfeld 22 sowie das elektrische Fernfeld 24 insbesondere so bemessen sein, dass sich bei einer Belegung des Fahrzeugsitzes durch einen Erwachsenen eine Schwächung sowohl des Nah- als auch des Fernfeldes, bei Wasser oder Feuchtigkeit, beispielsweise bei Wasser auf dem Fahrzeugkissen oder einem feuchten Kissen, eine Verstärkung des Nahfeldes und eine lediglich geringe Änderung des Fernfeldes, bei einem metallbasierten Kindersitz eine schwache Verstärkung des Nahfeldes und eine lediglich geringe Änderung des Fernfeldes und bei einem nicht metallbasierten Kindersitz eine schwache Verstärkung des Nahfeldes und keine Änderung des Fernfeldes ergibt.

Zur Erfassung von auf dem Fahrzeugsitz positionierten geerdeten Metallflächen können zudem Mittel zur Wirbelstrommessung vorgesehen sein. Dabei ergibt sich bei einer Belegung des Fahrzeugsitzes durch einen Erwachsenen, bei Wasser oder Feuchtigkeit sowie bei einer Sitzbelegung durch einen nicht metallbasierten Kindersitz jeweils keine Änderung des betreffenden Wirbelstrommesswertes. Bei einem metallbasierten Kindersitz ergibt sich eine lediglich geringe Änderung des Wirbelstrommesswertes. Dagegen stellt sich bei einer auf dem Fahrzeugsitz positionierten geerdeten Metallfläche wie beispielsweise einem geerdeten Notebook eine deutlich erfassbare Messwertänderung ein, sodass über eine solche Wirbelstrommessung eine jeweilige geerdete Metallfläche eindeutig erfasst wird.

Die Steuer- und/oder Auswerteeinrichtung 26 kann nun insbesondere so ausgeführt sein, dass in Abhängigkeit von der jeweiligen Feldstärke des Nahfeldes 22 und der jeweiligen Feldstärke des Fernfeldes 24 und gegebenen zusätzlich in Abhängigkeit von der Wirbelstrommessung unterschiedliche Belegungszustände erfassbar sind. Dabei kann diese Steuer- und/oder Auswerteeinrichtung 26 vor allem so ausgeführt sein, dass sie in Abhängigkeit von der jeweiligen Feldstärke des Nahfeldes 22 und der jeweiligen Feldstärke des Fernfeldes 24 bzw. deren Verhältnis und gegebenenfalls zusätzlich in Abhängigkeit von der Wirbelstrommessung zwischen den genannten unterschiedlichen Belegungszuständen unterscheidet.

Die Sendeelektrode 14 und/oder die Empfangselektroden 16, 18 können in Form einer flexiblen gedruckten Schaltung ausgeführt sein. Im vorliegenden Fall sind sowohl die Sendeelektrode 14 als auch die Empfangselektroden 16, 18 in Form einer solchen flexiblen gedruckten Schaltung ausgeführt.

Wie insbesondere anhand der Fig. 1 zu erkennen ist, sind die Sendeelektrode 14 und die Empfangselektroden 16, 18 zweckmäßigerweise in einem definierten Abstand d vom Sitzwannenboden 12 angeordnet. Dabei können diese Elektroden 14 - 18 insbesondere einen gleichen Abstand d zum Wannenboden 12 aufweisen. Dieser Abstand d kann beispielsweise im Bereich von etwa 3 mm liegen. Dabei können die Sendeelektrode 14 und die Empfangselektroden 16, 18 insbesondere über zugeordnete Abstandshalter 28 am Sitzwannenboden 12 angeordnet sein.

Die Abstandshalter 28 können insbesondere wieder flexibel ausgeführt sein. Zweckmäßigerweise sind gewebebasierte Abstandshalter 28 vorgesehen, wobei sie beispielsweise durch einen Filz oder dergleichen gebildet sein können. Zudem können diese Abstandshalter 28 ebenso wie die Elektroden 14 - 18 streifenförmig ausgeführt sein.

Wie anhand der Fig. 2 zu erkennen ist, können die streifenartigen Elektroden 14 - 18 insbesondere senkrecht zur Fahrtrichtung 30 ausgerichtet und in Fahrtrichtung 30 nebeneinander angeordnet sein. Dabei kann in Fahrtrichtung 30 betrachtet insbesondere die erste Empfangselektröde 16 vor der Sendeelektrode 14 und die zweite Empfangselektrode 18 nach der Sendeelektrode 14 angeordnet sein.

Insbesondere zur Cömmon-Mode-Unterdrückung können die Sendeelektrodenanordnung, die Empfangselektrodenanordnung und/oder die Steuer- und/oder Auswerteeinrichtung beispielsweise auch differentiell ausgeführt sein. Vorteilhafterweise ist also auch eine differentielle Ausführungsform des erfindungsgemäßen Systems denkbar.

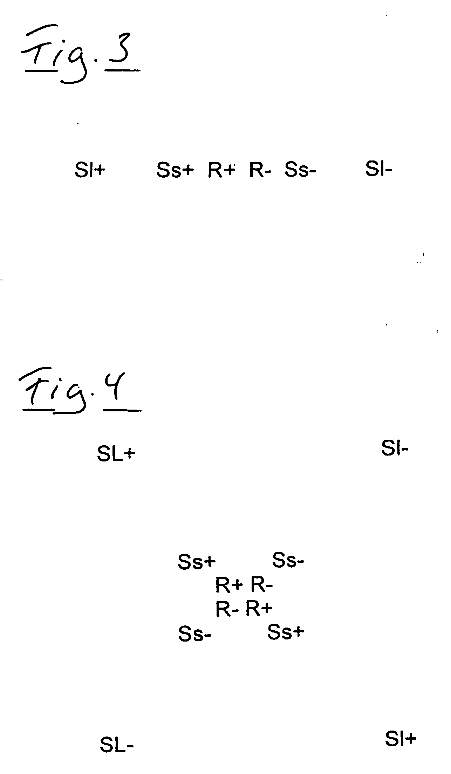

Fig. 3 zeigt in rein schematischer Darstellung eine beispielhafte Elektrodenanordnung für eine solche differentielle Ausführungsform des kapazitätsbasierten Systems. Dabei sind sowohl zwei Sendeelektroden S1+ und Sl- zur Erzeugung eines jeweiligen Fernfeldes als auch zwei Sendeelektroden Ss+ und Ss- zur Erzeugung eines jeweiligen Nahfeldes vorgesehen, wobei den beiden Sendeelektroden S1+ und Ss+ eine gemeinsame Empfangselektrode R+ und den beiden Sendeelektroden Sl- und Ss- eine gemeinsame Empfangselektrode R- zugeordnet sein kann. Wie in der Fig. 3 dargestellt, können die Elektroden beispielsweise in einer Reihe hinter- oder nebeneinander angeordnet sein, wobei beispielsweise die beiden Sendeelektroden S1+ und Sl- außen und die beiden Empfangselektroden R+ und R- innen angeordnet sein können. Beim vorliegenden Ausführungsbeispiel ergibt sich dabei in Fig. 3 von links nach rechts betrachtet die folgende Reihenfolge für diese Elektroden: S1+, Ss+, R+, R-, Ss-, Sl-.

Eine solche Anordnung ist unempfindlich gegenüber einer Common-Mode-Einkopplung.

Fig. 4 zeigt in rein schematischer Darstellung eine beispielhafte Anordnung von Sende- und Empfangselektroden, in der diese Elektroden entsprechend einer zweidimensionalen Anordnung verteilt sind. Auch in diesem Fall ist beispielsweise wieder eine differentielle Ausführung denkbar. Dabei können, wie in der Fig. 4 dargestellt, beispielsweise vier Sendeelektroden SL+, SL-, S1+, und Sl- zur Erzeugung eines jeweiligen Fernfeldes, vier Sendeelektroden Ss+, Ss-, Ss+, Ss- zur Erzeugung eines jeweiligen Nahfeldes, zwei Empfangselektroden R+, R+ und zwei Empfangselektroden R-, R- vorgesehen sein.

### Bezugszeichenliste

- 10: Sitzwanne
- 12: Wannenboden
- 14: Sendeelektrode
- 16: erste Empfangselektrode
- 18: zweite Empfangselektrode
- 20: Sitzschaum
- 20': Sitzschaumoberfläche
- 22: elektrisches Nahfeld
- 24: elektrisches Fernfeld
- 26: Steuer- und/oder Auswerteeinrichtung
- 28: Abstandshalter
- 30: Fahrtrichtung
- 32: Sendeelektrodenanordnung
- 34: Empfangselektrodenanordnung

- d: Abstand

## Patentansprüche

1. Kapazitätsbasiertes System zur Erfassung des Belegungszustandes eines Fahrzeugsitzes, mit einer Sendeelektrodenanordnung (32) und einer Empfangselektrodenanordnung (34), die auf der Unterseite des Sitzschaums (20) vorgesehen sind, wobei die Sendeelektrodenanordnung (32) so beaufschlagt und die Struktur der Sendeelektrodenanordnung (32) und/oder der Empfangselektrodenanordnung (34) so gewählt ist, dass sich zwischen der Sendeelektrodenanordnung (32) und der Empfangselektrodenanordnung (34) wenigstens ein im Wesentlichen nur bis in den Bereich der Sitzschaumoberfläche (20') reichendes elektrisches Nahfeld (22) und wenigstens ein insbesondere deutlich über den Bereich der Sitzschaumoberfläche (20') hinausreichendes elektrisches Fernfeld (24) einstellt, und eine Steuer- und/oder Auswerteeinrichtung (26) vorgesehen ist, die einen jeweiligen Belegungszustand in Abhängigkeit von sowohl der jeweiligen Feldstärke des wenigstens einen Nahfeldes (22) als auch der jeweiligen Feldstärke (24) des wenigstens einen Fernfeldes erfasst und bei belegtem Fahrzeugsitz in Abhängigkeit von einer gegebenenfalls relativ zueinander unterschiedlichen Beeinflussung des Nahfeldes und des Fernfeldes zwischen unterschiedlichen Belegungszuständen - - unterscheidet.

2. System nach Anspruch 1,
**dadurch gekennzeichnet,**
**dass** die Sendeelektrodenanordnung (32) wenigstens eine Sendeelektrode (14) und die Empfangselektrodenanordnung (34) wenigstens eine Empfangselektrode (16, 18) umfasst.

3. System nach Anspruch 2,
**dadurch gekennzeichnet,**
**dass** die Anzahl der Sendeelektroden (14) größer als die Anzahl der Empfangselektroden (16, 18) ist.

4. System nach Anspruch 2,
**dadurch gekennzeichnet,**
**dass** die Anzahl der Sendeelektroden (14) gleich oder kleiner als,die Anzahl der Empfangselektroden (16, 18) ist.

5. System nach einem der vorhergehenden Ansprüche,
**dadurch gekennzeichnet,**
**dass** die Sendeelektrodenanordnung (32), die Empfangselektrodenanordnung (34) und/oder die Steuer- und/oder Auswerteeinrichtung (26) insbesondere zur Common-Mode-Unterdrückung differentiell ausgeführt sind.

6. System nach einem der vorhergehenden Ansprüche,
**dadurch gekennzeichnet,**
**dass** die Sende- und/oder Empfangselektroden (14, 16, 18) zumindest teilweise entsprechend einer zweidimensionalen Anordnung verteilt sind.

7. System nach einem der vorhergehenden Ansprüche,
**dadurch gekennzeichnet,**
**dass** wenigstens eine Sendeelektrode (14) und/oder wenigstens eine Empfangselektrode (16, 18) jeweils streifenartig ausgeführt ist, wobei vorzugsweise zumindest zwei streifenartige Elektroden (14 - 18) vorgesehen sind, die parallel zueinander angeordnet sind.

8. System nach einem der vorhergehenden Ansprüche,
**dadurch gekennzeichnet,**
**dass** wenigstens eine Sendeelektrode (14) und/oder wenigstens eine Empfangselektrode (16, 18) in Form einer flexiblen gedruckten Schaltung ausgeführt sind, wobei bevorzugt alle Elektroden (14, 16, 18) in Form einer flexiblen gedruckten Schaltung ausgeführt sind.

9. System nach einem der vorhergehenden Ansprüche,
**dadurch gekennzeichnet,**
**dass** wenigstens eine Sendeelektrode (14) und/oder wenigstens eine Empfangselektrode (16, 18) im Bereich des Bodens (12) einer dem Fahrzeugsitz zugeordneten Sitzwanne (10) angeordnet ist, wobei vorzugsweise wenigstens eine Sendeelektrode (14) und/oder wenigstens eine Empfangselektrode (16, 18) in einem definierten Abstand (d) vom Sitzwannenboden (12) angeordnet ist und vorzugsweise der Abstand (d) zwischen dem Sitzwannenboden (12) und wenigstens einer Sendeelektrode (14) und/oder wenigstens einer Empfangselektrode (16, 18) im Bereich von etwa 3 mm liegt.

10. System nach Anspruch 9,
**dadurch gekennzeichnet,**
**dass** wenigstens eine Sendeelektrode (14) und/oder wenigstens eine Empfangselektrode (16, 18) jeweils über einen zugeordneten, vorzugsweise flexibel ausgeführten Abstandshalter (28) am Sitzwannenboden (12) angeordnet ist.

11. System nach einem der vorhergehenden Ansprüche,
**dadurch gekennzeichnet,**
**dass** als Abstandshalter (28) jeweils ein gewebebasierter Abstandshalter vorgesehen ist.

12. System nach einem der vorhergehenden Ansprüche,
**dadurch gekennzeichnet,**
**dass** wenigstens ein Abstandshalter (28) streifenartig ausgeführt ist.

13. System nach einem der vorhergehenden Ansprüche,
**dadurch gekennzeichnet,**
**dass** zur Erfassung von auf dem Fahrzeugsitz positionierten geerdeten Metallflächen zudem Mittel zur Wirbelstrommessung vorgesehen sind.

14. System nach einem der vorhergehenden Ansprüche,
**dadurch gekennzeichnet,**
**dass** die Steuer- und/oder Auswerteeinrichtung (26) so ausgeführt ist, dass in Abhängigkeit von der jeweiligen Feldstärke wenigstens eines Nahfeldes (22) und der jeweiligen Feldstärke wenigstens eines Fernfeldes (24) und/oder in Abhängigkeit von der Wirbelstrommessung unterschiedliche Belegungszustände erfassbar sind.

15. System nach Anspruch 14,
**dadurch gekennzeichnet,**
**dass** die Steuer- und/oder Auswerteeinrichtung (26) so ausgeführt ist, dass sie in Abhängigkeit von der jeweiligen Feldstärke wenigstens eines Nahfeldes (22) und der jeweiligen Feldstärke wenigstens eines Fernfeldes (24) und/oder in Abhängigkeit von der Wirbelstrommessung zwischen unterschiedlichen Belegungszuständen unterscheidet.

## Claims

1. Capacitance based system for detecting the occupancy status of a vehicle seat, having a transmitting electrode arrangement (32) and a receiving electrode arrangement (34) which are provided on the bottom side of the seat foam (20), wherein the transmitting electrode arrangement (32) is provided such and the structure of the transmitting electrode arrangement (32) and/or the receiving electrode arrangement (34) is selected such that, between the transmitting electrode arrangement (32) and the receiving electrode arrangement (34), at least one electrical near field (22), extending substantially only into the area of the seat foam surface (20'), and at least one electrical far field (24), in particular extending beyond the area of the seat foam surface (20'), is effected, and a control and/or evaluation device (26) is provided for detecting a respective occupancy status in dependence on both the respective field strength of the at least one near field (22) and the respective field strength (24) of the at least one far field, and, when the vehicle seat is occupied, for differentiating between different occupancy statuses in dependence on different influence of the near field and the far field relative to each other, if any.

2. System according to claim 1,
**characterized in that**
the transmitting electrode arrangement (32) includes at least one transmitting electrode (14) and the receiving electrode arrangement (34) includes at least one receiving electrode (16, 18).

3. System according to claim 2,
**characterized in that**
the number of transmitting electrodes (14) is higher than the number of receiving electrodes (16, 18).

4. System according to claim 2,
**characterized in that**
the number of transmitting electrodes (14) is equal or smaller than the number of receiving electrodes (16, 18).

5. System according to one of the preceding claims,
**characterized in that**
the transmitting electrode arrangement (32), the receiving electrode arrangement (34) and/or the control and/or evaluation device (26) are provided differentially, in particular for common mode suppression.

6. System according to one of the preceding claims,
**characterized in that**
the transmitting and/or receiving electrodes (14, 16, 18) are distributed at least partially corresponding to a two-dimensional arrangement.

7. System according to one of the preceding claims,
**characterized in that**
at least one transmitting electrode (14) and/or at least one receiving electrode (16, 18) each are provided stripe-like, wherein preferably at least two stripe-like electrodes (14 - 18) are provided, arranged parallel to one another.

8. System according to one of the preceding claims,
**characterized in that**
at least one transmitting electrode (14) and/or at least one receiving electrode (16, 18) are provided in the form of a flexible printed circuit, wherein preferably all electrodes (14, 16, 18) are provided in the form of a flexible printed circuit.

9. System according to one of the preceding claims,
**characterized in that**
at least one transmitting electrode (14) and/or at least one receiving electrode (16, 18) is arranged in the area of the base (12) of a seat pan (10) associated with the vehicle seat, wherein preferably at least one transmitting electrode (14) and/or at least one receiving electrode (16, 18) is arranged at a defined distance (d) from the seat pan base (12) and preferably the distance (d) between the seat pan base (12) and at least one transmitting electrode (14) and/or at least one receiving electrode (16, 18) is about 3 mm.

10. System according to claim 9,
**characterized in that**
at least one transmitting electrode (14) and/or at least one receiving electrode (16, 18) are each arranged via an associated, preferably flexible spacer (28) at the seat pan base (12).

11. System according to one of the preceding claims,
**characterized in that**
a fabric-based spacer is provided as spacer (28), respectively.

12. System according to one of the preceding claims,
**characterized in that**
at least one spacer (28) is provided in a stripe-like manner.

13. System according to one of the preceding claims,
**characterized in that**
means for eddy current measurement are further provided for detecting grounded metal surfaces positioned on the vehicle seat.

14. System according to one of the preceding claims,
**characterized in that**
the control and/or evaluation device (26) is adapted such that different occupancy statuses are detectable depending on the respective field strength of at least one near field (22) and the respective field strength of at least one far field (24) and/or depending on the eddy current measurement.

15. System according to claim 14,
**characterized in that**
the control and/or evaluation device (26) is adapted such that it differentiates between different occupancy statuses depending on the respective field strength of at least one near field (22) and the respective field strength of at least one far field (24) and/or depending on the eddy current measurement.

## Revendications

1. Système basé sur la capacité pour déterminer l'état d'occupation d'un siège de véhicule, comprenant un agencement formant électrode émettrice (32) et un agencement formant électrode réceptrice (34), qui sont prévus sur la face intérieure de la mousse du siège (20), de sorte que l'agencement formant électrode émettrice (32) est sollicité de telle façon, et que la structure de l'agencement formant électrode émettrice (32) et/ou de l'agencement formant électrode réceptrice (34) et choisie de telle façon qui s'établit entre l'agencement formant électrode émettrice (32) et l'agencement formant électrode réceptrice (34) au moins un champ électrique proche (22) qui s'étend sensiblement seulement jusque dans la zone de la surface (20') de la mousse du siège, et au moins un champ électrique lointain qui s'étend en particulier nettement au-delà de la zone de la surface (20') de la mousse du siège, et dans lequel il est prévu un dispositif de commande et/ou d'évaluation (26) qui détermine un état d'occupation respectif en fonction de l'intensité de champ respectif dudit au moins un champ proche (22) tout comme en fonction de l'intensité de champ respectif dudit au moins un champ lointain (24), et qui, lorsque le siège est occupé, fait une différence entre divers états d'occupation en fonction d'une influence, le cas échéant mutuellement différente, du champ proche (22) et du champ lointain (24).

2. Système selon la revendication 1,
**caractérisé en ce que** l'agencement formant électrode émettrice (32) comprend au moins une électrode émettrice (14), et l'agencement formant électrode réceptrice (34) comprend au moins une électrode réceptrice (16, 18).

3. Système selon la revendication 2,
**caractérisé en ce que** le nombre des électrodes émettrices (14) est supérieur au nombre des électrodes réceptrices (16, 18).

4. Système selon la revendication 2,
**caractérisé en ce que** le nombre des électrodes émettrices (14) et inférieur ou égal au nombre des électrodes réceptrices (16, 18).

5. Système selon l'une des revendications précédentes,
**caractérisé en ce que** l'agencement formant électrode émettrice (32), l'agencement formant électrode réceptrice (34) et/ou le dispositif de commande et/ou d'évaluation (26) sont réalisés de manière différentielle, en particulier pour la suppression du mode dit "Common-Mode".

6. Système selon l'une des revendications précédentes,
**caractérisé en ce que** les électrodes émettrices et/ou les électrodes réceptrices (14, 16, 18) sont réparties au moins partiellement en correspondance d'un agencement tridimensionnel.

7. Système selon l'une des revendications précédentes,
**caractérisé en ce qu'**au moins une électrode émettrice (14) et/ou au moins une électrode réceptrice (16, 18) est réalisée respectivement à la manière d'une bande, et dans lequel il est prévu de préférence au moins deux électrodes (14-18) analogues à des bandes, qui sont agencées parallèlement l'une à l'autre.

8. Système selon l'une des revendications précédentes,
**caractérisé en ce qu'**au moins une électrode émettrice (14) et/ou au moins une électrode réceptrice (16, 18) sont réalisées sous la forme d'un circuit imprimé flexible, et de préférence toutes les électrodes (14, 16, 18) sont réalisées sous la forme d'un circuit imprimé flexible.

9. Système selon l'une des revendications précédentes,
**caractérisé en ce qu'**au moins une électrode émettrice (14) et/ou au moins une électrode réceptrice (16, 18) est agencée dans la région du fond (12) d'une cuvette de siège (10) associée au siège du véhicule, dans lequel de préférence au moins une électrode émettrice (14) et/ou au moins une électrode réceptrice (16, 18) est agencée à une distance définie (d) du fond (12) de la cuvette de siège, et de préférence la distance (d) entre le fond (12) de la cuvette de siège et au moins une électrode émettrice (14) et/ou au moins une électrode réceptrice (16, 18) est dans la plage d'environ 3 mm.

10. Système selon la revendication 9,
**caractérisé en ce qu'**au moins une électrode émettrice (14) et/ou au moins une électrode réceptrice (16, 18) est agencée respectivement sur le fond (12) de la cuvette de siège via un moyen écarteur (28) associé, réalisé de préférence sous forme flexible.

11. Système selon l'une des revendications précédentes,
**caractérisé en ce qu'**il est respectivement prévu un moyen écarteur à base textile à titre de moyen écarteur (28).

12. Système selon l'une des revendications précédentes,
**caractérisé en ce qu'**au moins un moyen écarteur (28) est réalisé sous forme de ruban.

13. Système selon l'une des revendications précédentes,
**caractérisé en ce qu'**il est en outre prévu des moyens pour la mesure de courants de Foucault en vue de détecter des surfaces métalliques mises à la terre positionnées sur le siège de véhicule.

14. Système selon l'une des revendications précédentes,
**caractérisé en ce que** le dispositif de commande et/ou d'évaluation (26) est ainsi réalisé qu'il est possible de détecter des états d'occupation différents en fonction de l'intensité de champ respective d'au moins un champ proche (22) et de l'intensité de champ respective d'au moins un champ lointain (24), et/ou en fonction de la mesure des courants de Foucault.

15. Système selon la revendication 14,
**caractérisé en ce que** le dispositif de commande et/ou d'évaluation (26) est ainsi réalisé qu'il fait une différence entre différents états d'occupation en fonction de l'intensité de champ respective d'au moins un champ proche (22) et de l'intensité de champ respective d'au moins un champ lointain (24), et/ou en fonction de la mesure des courants de Foucault.
